Europäisches Patentamt

European Patent Office

Office européen des brevets

(19)

(11) Veröffentlichungsnummer : **0 163 187**
**B1**

(12) # EUROPÄISCHE PATENTSCHRIFT

(45) Veröffentlichungstag der Patentschrift :
03.01.90

(51) Int. Cl.⁵ : **B 60 R 9/04**

(21) Anmeldenummer : 85105827.1

(22) Anmeldetag : 11.05.85

(54) Dachgepäckträger für Kraftfahrzeuge.

(30) Priorität : 19.05.84 DE 3418770

(43) Veröffentlichungstag der Anmeldung :
04.12.85 Patentblatt 85/49

(45) Bekanntmachung des Hinweises auf die Patenterteilung : 03.01.90 Patentblatt 90/01

(84) Benannte Vertragsstaaten :
AT CH DE FR GB IT LI SE

(56) Entgegenhaltungen :
DE—A— 2 939 671
DE—A— 2 945 950
DE—A— 3 151 404
DE—A— 3 151 405
DE—A— 3 209 912

(73) Patentinhaber : Adam Opel Aktiengesellschaft
Bahnhofsplatz 1 Postfach 1560
D-6090 Rüsselsheim (DE)

(72) Erfinder : Gallion, Georg A.
Joh.-Sebastian-Bach-Strasse 35
D-6200 Wiesbaden (DE)
Erfinder : Bratke, Dieter N.
Lärchenweg 14
D-6081 Wallerstädten (DE)
Erfinder : Helbig, Klaus, Dipl.-Ing. (FH)
P.-Hessemer-Strasse 86
D-6090 Rüsselsheim (DE)
Erfinder : Reuter, Karl F. Ing. grad.
Komotauer Weg 6
D-6092 Kelsterbach (DE)

(74) Vertreter : Rosenfeld, Jürgen, Dipl. Ing. et al
Adam Opel Ag Patentabteilung Bahnhofsplatz 1 Postfach 17 10
D-6090 Rüsselsheim (DE)

## Beschreibung

Die Erfindung betrifft einen Dachgepäckträger für Kraftfahrzeuge mit einer Vorrichtung zur Befestigung an einem Flansch, der in einer im seitlichen Dachbereich in Fahrzeuglängsrichtung verlaufenden Rinne ausgebildet ist, die von einer Blendleiste abgedeckt wird, die lediglich an der Befestigungsstelle des Dachgepäckträgers einen Durchgang für den Stützfuß une die Spannpratze des Dachgepäckträgers aufweist, und Stützfuß und Spannpratze nach der Außenseite hin von einer Abdeckkappe abgedeckt sind, deren Unterkante in der Nähe der Dachoberfläche sich befindet (siehe z. B. DE-A-31 51 405).

Die Durchbrechung in der Blendleiste ist bei nichtbenutztem Dachgepäckträger in der Regel abgedeckt und sie wird nur dann freigelegt, wenn der Dachgepäckträger befestigt werden soll. Bei nichtbefestigtem Dachgepäckträger ist durch die Abdeckung der Durchbrechung sichergestellt, daß kein Wasser, Schmutz oder dergl. in die Rinne eintreten kann. Bei befestigtem Dachgepäckträger, wenn also die Durchbrechung freigelegt sein muß, kann Wasser, Schmutz oder dergl. in die Rinne gelangen, da der Stützfuß und die Spannpratze des Dachgepäckträgers in der Regel die Rinne bzw. die Durchbrechung nicht so ausfüllen können, daß dadurch eine Abdichtung erreicht werden kann. Die Blendleiste der bekannten Dachgepäckträgeranordnung nach der DE-A-31 51 405 weist eine unter Federeinwirkung stehende Klappe für den Durchtritt der Spannpratze auf. Da diese Klappe bei aufgesetztem Gepäckträger jedoch einen Spalt bildet, kann auch hier Wasser, Schnee, Schmutz oder dergl. in die Rinne eintreten.

Die Erfindung hat sich daher die Aufgabe gestellt, einen Dachgepäckträger zu schaffen, der in der Lage ist zu verhindern, daß während seiner Benutzung am Fahrzeug Schmutz, Wasser, Schnee oder dergl. in die Rinne eindringen kann. Dies soll mit einfachen Mitteln und möglichst ohne zusätzliche Teile erfolgen.

Erfindungsgemäß wird dies dadurch erreicht, daß als Durchgang gemeinsam für den Stützfuß und für die Spannpratze des Dachgepäckträgers eine Durchbrechung in der Blendleiste vorgesehen ist und daß die Unterkante der Abdeckkappe mit einer Dichtlippe zur Auflage auf der Dachhaut und/oder der Blendleiste versehen ist.

Die Dichtlippe an der in Fahrzeuglängsrichtung verlaufenden Unterkante der Abdeckkappe wird zweckmäßiger Weise unmittelbar auf der Dachhaut aufliegen. Um eine Abdichtung auch quer zur Fahrzeuglängsrichtung über den Bereich der Blendleiste zu erreichen, besitzt in vorteilhafter Weise die Abdeckkappe quer zur Fahrzeuglängsrichtung verlaufende seitliche Wandungen, wobei die Dichtlippe an deren Unterkante sich über die Blendleiste erstreckt. Damit ist die Durchbrechung in der Blendleiste an drei Seiten abgedichtet. Es fehlt jedoch die Abdichtung der Durchbrechung nach der Fahrzeugmitte zu. Diese Abdichtung wird nach einem weiteren Merkmal der Erfindung in einfacher und zweckmäßiger Weise dadurch erreicht, daß am Stützfuß eine Dichtlippe angeordnet ist, die einen unmittelbaren Anschluß an die Dichtlippe der Abdeckkappe ergibt. Somit ist die Durchbrechung nun bei aufgesetztem Dachgepäckträger nach allen vier Seiten abgedichtet, so daß Wasser, Schnee, Verunreinigungen oder dergl. nicht in die Rinne eindringen können. Eine vereinfachte Anbringung der Dichtlippe am Stützfuß ergibt sich dann, wenn die Dichtlippe mit der unteren Ummantelung des Stützfußes einteilig ausgebildet ist.

Im oberen Bereich des Stützfußes ist eine Öffnung ausgebildet, in die in bekannter Weise ein Querträger eingesteckt ist, an dem sich die verschiedenen Halteeinrichtungen für die auf dem Dach zu befestigenden Gegenstände befinden. Da diese Öffnung bzw. Durchbrechung durch den oberen Teil des Stützfußes hindurch geht, d. h. seitlich offen ist, ist es zweckmäßig, die Abdeckkappe nach oben bis über die Durchbrechung für den Querträger im oberen Teil des Stützfußes reichen zu lassen, so daß die Abdeckkappe die Durchbrechung ebenfalls abdeckt. Auf diese Weise kann erreicht werden, daß bei einer Lockerung der Verklemmung des Querträgers dieser sich nicht all zu weit seitlich verschieben kann, wodurch bei Kurvenfahrt eine gefährliche Verschiebung der Ladung erfolgen könnte.

Der Stützfuß des Dachgepäckträgers stützt sich auf dem Grund der Rinne z. B. eines Schweißkanals, ab. Um dabei eine eindeutige Abstützung, d. h. einen stabilen Zustand zu erreichen, weist der relativ breit ausgebildete Stützfuß etwa in seiner Mitte eine von der Unterkante nach oben reichende Ausnehmung auf. Damit wird eine Zweipunktabstützung erreicht, so daß ein Kippen ausgeschlossen ist.

Für das Festklemmen des Dachgepäckträgers an dem Flansch ist es zweckmäßig, wenn beiderseits der Ausnehmung je eine Spannpratze vorgesehen ist. Durch das Anbringen von zwei Spannpratzen pro Stützfuß können die Bremskräfte besser aufgenommen werden, d. h. die Klemmkraft wird in einem bestimmten größeren Abstand jeweils besonders wirksam.

Spannpratzen und Stützfuß, d. h. die Befestigungsstellen sind so ausgebildet, daß keine unmittelbare Abscherkraft durch den Dachgepäckträger an dem Flansch auftritt. Zu diesem Zwecke weisen die Spannpratzen in der Projektion auf den Stützfuß mit ihren äußeren Kanten einen gewissen Abstand zu den äußeren Kanten des Stützfußes auf. Fernerhin können die Kanten des Stützfußes und auch der Spannpratzen mit Radien versehen, d. h. abgerundet sein.

In der Zeichnung ist ein Ausführungsbeispiel der Erfindung dargestellt.

Es zeigt :

Fig. 1 den Stützfuß des Dachgepäckträgers mit Spannpratzen in perspektivischer Ansicht,

Fig. 2 den Stützfuß befestigt auf den Flansch,

Fig. 3 die den Stützfuß und die Spannpratzen abdeckende Abdeckkappe,

Fig. 4 den Dachgepäckträger mit Abdeckkappe im montierten Zustand und

Fig. 5 einen Schnitt durch den Stützfuß.

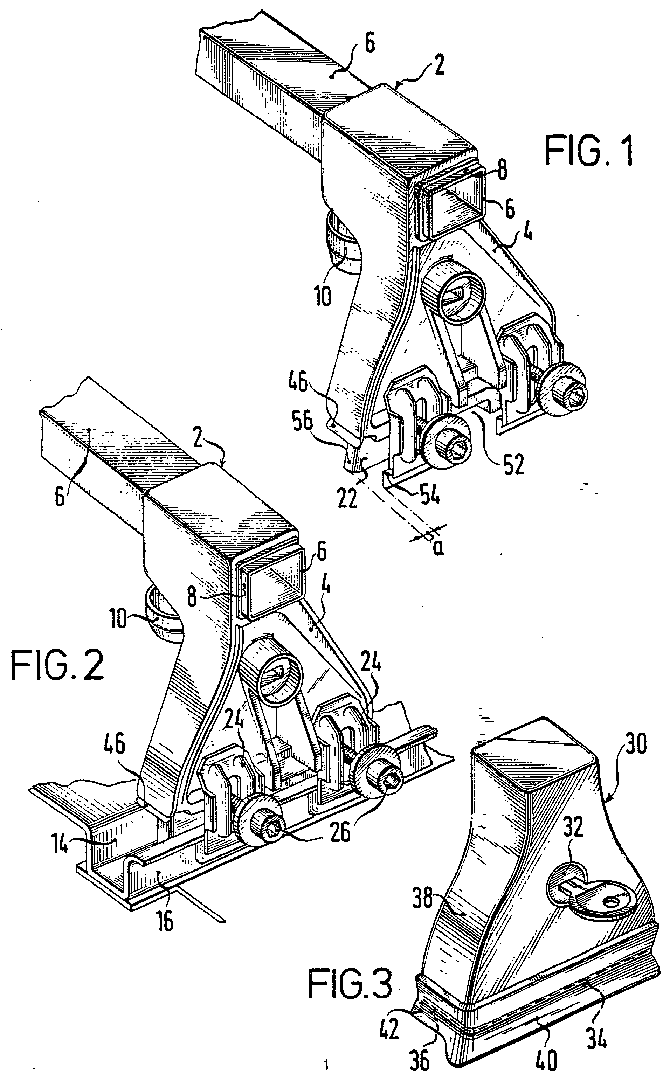

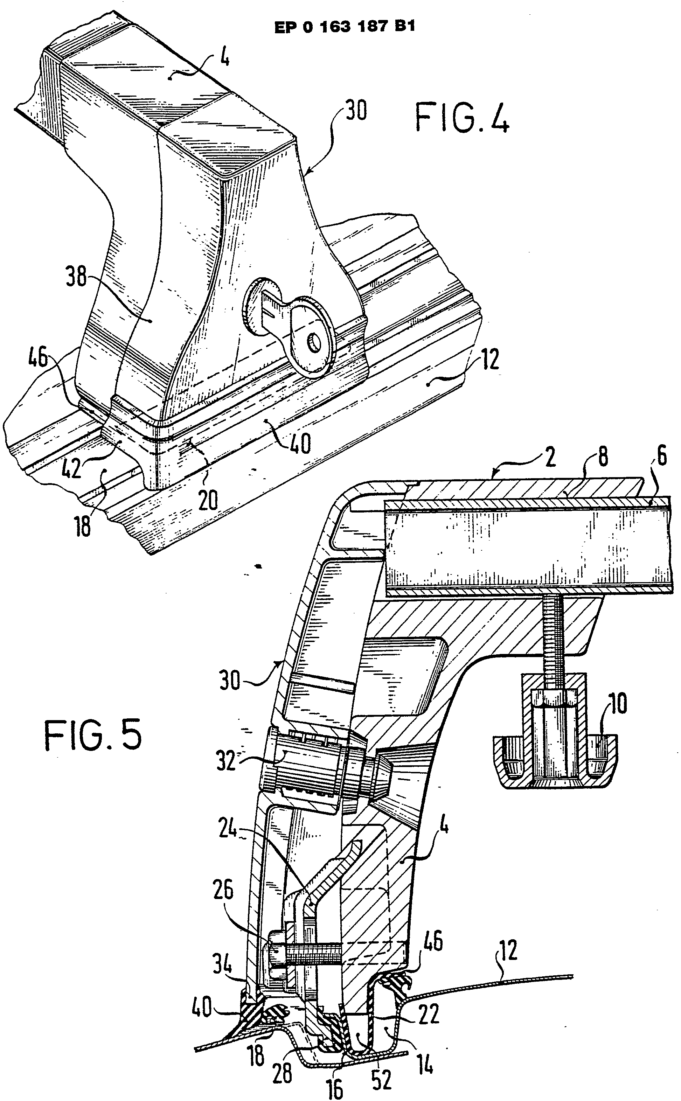

Fig. 1 zeigt den Dachgepäckträger 2, der aus dem Stützfuß 4 besteht, sowie aus einem Querbalken 6, der in einer Durchbrechung 8 im Stützfuß 4 gehalten und mittels einer Klemmschraube 10 am Verschieben gehindert ist. Der Stützfuß 4 hat die in Fig. 6 gezeigte Querschnittsform. Mit seinem unteren Ende ruht er am Grund der seitlich im Dach 12 ausgebildeten Rinne 14, die ein Schweißkanal sein kann, in der ein Flansch 16 ausgebildet ist, an dem der Dachgepäckträger 2 befestigt wird. Die Rinne 14 ist von einer Blendleiste 18 (Fig. 4) abgedeckt, die eine Durchbrechung 20 für den Durchgang des Stützfußes 4 aufweist, die in irgend einer Form bei nicht benutztem Dachgepäckträger 2 abgedeckt ist.

Der Stützfuß 4 ist am unteren Ende mit einer Ummantelung 22 versehen, die aus Gummi oder dgl. bestehen kann. Am Stützfuß 4 befindet sich die Spannpratze 24, wie Fig. 1 und 2 zeigen. Diese werden durch Anziehen der Schrauben 26 so gegen den Stützfuß 4 gedrückt, daß ihr unteres Ende 28, das ebenfalls mit einer Ummantelung versehen ist, sich mit dem Stützfuß 4 am Flansch 16 festklemmt.

Eine Abdeckkappe 30, die mittels einer Schließvorrichtung 32 am Stützfuß 4 befestigt werden kann, deckt diesen und damit auch die Spannpratzen 24 nach außen ab. Die Unterkante 34 der Abdeckkappe 30, die sowohl in Fahrzeuglängsrichtung verläuft als auch mit Abschnitten 36 quer dazu, weil diese von seitlichen Wandungen 38 gebildet werden, befinden sich in montierter Stellung nahe der Oberfläche des Daches 12. Die Unterkanten 34 und 36 sind mit einer Dichtlippe 40 bzw. 42 aus geeignetem Material versehen, von denen die Dichtlippe 40 auf der Dachhaut 12 aufliegt. Sie könnte jedoch auch auf der Blendleiste 18 aufliegen, wenn diese dazu breit genug wäre. Die in Fahrzeugquerrichtung verlaufenden Dichtlippen 42 verlaufen quer über die Blendleiste 18, und zwar in etwa der Breite der Durchbrechung 20, wie sich aus Fig. 4 ergibt.

Die verbleibende Abdichtung der Durchbrechung 20 nach der Mitte zu wird von einer Dichtlippe 46 bewirkt, die am Stützfuß 4 angebracht ist. Sie ist einteilig mit der Ummantelung 22 ausgebildet und liegt auf der Blendleiste 18 auf. An den Seiten des Stützfußes 4 verläuft die Dichtlippe 46 ein bestimmtes Maß in Querrichtung und überlappt sich dabei mit den Dichtlippen 42, so daß eine geschlossene Abdichtung der Durchbrechung 20 gegeben ist.

Die Abdeckkappe 30 reicht so weit nach oben, daß sie die Durchbrechung 8 für den Querträger 6 abdeckt.

Der am unteren Ende relativ breit (in Fahrzeuglängsrichtung) ausgebildete Stützfuß 4 besitzt in seiner Mitte eine Ausnehmung 52 (Fig. 1), wodurch sich eine Zweipunktabstützung des Stützfußes 4 am Grund der Rinne 14 ergibt. Jeweils neben der Ausnehmung 52 befindet sich eine Spannpratze 24. Deren äußere Kanten 54 (Fig. 1) sind um einen gewissen Abstand « a » gegenüber den äußeren Kanten 56 versetzt, d. h. also die Spannflächen sind zueinander versetzt. Dadurch ergibt sich keine unmittelbare Abscherwirkung am Flansch 16. Zu diesem Zwecke kann der Stützfuß 4 an der Kante 56 wie in Fig. 1 gezeigt, auch leicht abgerundet sein. Durch die große Breite des Stützfußes 4 am unteren Ende wird die Last auf eine größere Fläche verteilt.

## Patentansprüche

1. Dachgepäckträger (2) für Kraftfahrzeuge mit einer Vorrichtung zur Befestigung an einem Flansch (16), der in einer im seitlichen Dachbereich (12) in Fahrzeuglängsrichtung verlaufenden Rinne (14) ausgebildet ist, die von einer Blendleiste (18) abgedeckt wird, die lediglich an der Befestigungsstelle des Dachgepäckträgers einen Durchgang (20) für den Stützfuß (4) und die Spannpratze (24) des Dachgepäckträgers aufweist, und Stützfuß (4) und Spannpratze (24) nach der Außenseite hin von einer Abdeckkappe (30) abgedeckt sind, deren Unterkante (34, 36) in der Nähe der Dachoberfläche (12) sich befindet, dadurch gekennzeichnet, daß als Durchgang gemeinsam für den Stützfuß (4) und für die Spannpratze (24) eine Durchbrechung (20) in der Blendleiste (18) vorgesehen ist und daß die Unterkante (34, 36) der Abdeckkappe (30) mit einer Dichtlippe (40, 42) zur Auflage auf der Dachhaut (12) und/ oder der Blendleiste (18) versehen ist.

2. Dachgepäckträger nach Anspruch 1, dadurch gekennzeichnet, daß die Abdeckkappe (30) quer zur Fahrzeuglängsrichtung verlaufende seitliche Wandungen (38) besitzt und die Dichtlippe (42) an deren Unterkante (36) sich über die Blendleiste (18) erstreckt.

3. Dachgepäckträger nach Anspruch 1 und 2, dadurch gekennzeichnet, daß am Stützfuß (4) eine Dichtlippe (46) angeordnet ist, die einen unmittelbaren Anschluß an die Dichtlippe (42) der Abdeckkappe (30) ergibt.

4. Dachgepäckträger nach Anspruch 3, dadurch gekennzeichnet, daß die Dichtlippe (46) des Stützfußes (4) mit der unteren Ummantelung (22) desselben einteilig ausgebildet ist.

5. Dachgepäckträger nach Anspruch 1 bis 4, dadurch gekennzeichnet, daß die Abdeckkappe (30) nach oben bis über die Durchbrechung (8) für den Querträger (6) im oberen Teil des Stützfußes (4) reicht und die Durchbrechung (8) abdeckt.

6. Dachgepäckträger nach Anspruch 1, dadurch gekennzeichnet, daß der am unteren Ende relativ breit ausgebildete Stützfuß (4) etwa in seiner Mitte eine von der Unterkante nach oben reichende Ausnehmung (52) aufweist (Fig. 1).

7. Dachgepäckträger nach Anspruch 1, dadurch gekennzeichnet, daß beiderseits der Ausnehmung (52) je eine Spannpratze (24) vorgesehen ist.

8. Dachgepäckträger nach Anspruch 6 und 7, dadurch gekennzeichnet, daß die Spannpratzen (24) in der Projektion auf den Stützfuß (4) mit ihren äußeren Kanten (54) einen gewissen Abstand (a) zu den weiter außen liegenden äußeren Kanten (56) des Stützfußes (4) aufweisen.

9. Dachgepäckträger nach Anspruch 6 bis 8, dadurch gekennzeichnet, daß die Kanten (56) am Stützfuß (4) abgerundet sind.

## Claims

1. Luggage roof rack (2) for motor vehicles with a device for securing to a flange (16) which is formed in a gutter (14) running along the side of the roof area (12) in the longitudinal direction of the vehicle, the gutter being concealed by a facing strip (18) which has an opening (20) for the supporting leg (4) and the clamping shoe (24) of the luggage roof rack provided only at the securing point of the luggage roof rack, and supporting leg (4) and clamping shoe (24) are concealed towards the outside by a protective cover (30) whose bottom edge (34, 36) is situated near the roof top surface (12), characterised in that for the common opening for the supporting leg (4) and for the clamping shoe (24) of the luggage roof rack there is provided a perforation (20) in the facing strip (18) and that the bottom edge (34, 36) of the protective cover (30) is provided with a sealing lip (40, 42) for mounting on the roof skin (12) and/or the facing strip (18).

2. Luggage roof rack according to claim 1, characterised in that the protective cover (30) has lateral walls (38) running transverse to the longitudinal direction of the vehicle and the bottom edge (36) of the sealing lip (42) extends over the facing strip (18).

3. Luggage roof rack according to claim 1 and 2, characterised in that the supporting leg (4) has a sealing lip (46) which provides a direct connection with the sealing lip (42) of the protective cover (30).

4. Luggage roof rack according to claim 3, characterised in that the sealing lip (46) of the supporting leg (4) is constructed in one piece with the bottom skirting (22) of the same.

5. Luggage roof rack according to claim 1 to 4, characterised in that the protective cover (30) extends upwards over the perforation (8) for the cross beam (6) in the upper part of the supporting leg (4) and covers the perforation (8).

6. Luggage roof rack according to claim 1, characterised in that approximately in the centre of the bottom end of the relatively wide supporting leg (4) there is provided a recess (52) reaching from the bottom edge upwards (Fig. 1).

7. Luggage roof rack according to claim 1, characterised in that on both sides of the recess (52) there is provided a clamping shoe (24).

8. Luggage roof rack according to claim 6 and 7, characterised in that the outer edges (54) of the clamping shoes (24) are at a specific distance (a) from the further outwardly arranged edges (56) of the supporting leg (4), in the projection towards the supporting leg (4).

9. Luggage roof rack according to claim 6 to 8, characterised in that the edges (56) on the supporting leg (4) are rounded off.

## Revendications

1. Galerie porte-bagage (2) pour véhicules automobiles avec un dispositif pour fixation sur une bride (16) qui est formée dans une goulotte (14) s'étendant, dans la zone latérale du toit (12), dans le sens longitudinal du véhicule, laquelle est recouverte d'un listel borgne (18) qui présente, simplement à l'endroit de fixation de la galerie porte-bagage, un passage (20) pour la béquille (4) et la griffe de serrage (24) de la galerie porte-bagage, la béquille (4) et la griffe de serrage (24) étant recouvertes vers l'extérieur d'un cache de recouvrement (30) dont le bord inférieur (34, 36) se trouve au voisinage de la surface du toit (12), caractérisée par le fait que, comme passage à la fois pour la béquille (4) et pour la griffe de serrage (24), une découpure (20) est prévue dans le listel borgne (18) et que le bord inférieur (34, 36) du cache de recouvrement (30) est muni d'une lèvre d'étanchéité (40, 42) pour l'appui sur la surface du toit (12) et/ou sur le listel borgne (18).

2. Galerie porte-bagage selon la revendication 1, caractérisée par le fait que le cache de recouvrement (30) possède des parois latérales (38) s'étendant transversalement au sens longitudinal du véhicule et que, sur son bord inférieur (36), la lèvre d'étanchéité (42) s'étend au-dessus du listel borgne (18).

3. Galerie porte-bagage selon les revendications 1 et 2, caractérisée par le fait que, sur la béquille (4) est disposée une lèvre d'étanchéité (46) laquelle se raccorde directement à la lèvre d'étanchéité (42) du cache de recouvrement (30).

4. Galerie porte-bagage selon la revendication 3, caractérisé par le fait que la lèvre d'étanchéité (46) de la béquille (4) est formée d'une seule pièce avec l'enveloppe (22) inférieure de ladite béquille.

5. Galerie porte-bagage selon les revendications 1 à 4, caractérisée par le fait que le cache de recouvrement (30) s'étend vers le haut jusque par dessus la découpure (8) pour la traverse (6) dans la partie supérieure de la béquille (4) et recouvre la découpure (8).

6. Galerie porte-bagage selon la revendication 1, caractérisée par le fait que la béquille (4) de conformation relativement large à sa partie inférieure présente, approximativement en son milieu, une cavité (52) s'étendant du bord inférieur vers le haut (Figure 1).

7. Galerie porte-bagage selon la revendication 1, caractérisée par le fait qu'une griffe de serrage (24) est prévue de chaque côté de la cavité (52).

8. Galerie porte-bagage selon les revendications 6 et 7, caractérisée par le fait que les griffes de serrage (24) présentent par leurs bords extérieurs (54), en projection sur la béquille (4), un certain écartement (a) par rapport aux bords extérieurs (56) de la béquille (4), en position la plus extérieure.

9. Galerie porte-bagage selon les revendications 6 à 8, caractérisée par le fait que les bords (56) sur la béquille (4) sont arrondis.

FIG. 1

FIG.2

FIG.3

FIG.4

FIG.5